# EUROPÄISCHE PATENTSCHRIFT

(11) **EP 3 812 177 B1**
(45) Veröffentlichungstag und Bekanntmachung des Hinweises auf die Patenterteilung: **22.02.2023**
(21) Anmeldenummer: 20198023.2
(22) Anmeldetag: 24.09.2020
(51) Int. Cl.: B60C 11/24, B60C 23/06

(54) **VERFAHREN ZUR ERMITTLUNG VON REIFENVERSCHLEISS BEI RADREIFEN EINES FAHRZEUGS UND FAHRZEUG ZUR DURCHFÜHRUNG DES VERFAHRENS**
METHOD FOR DETERMINING TYRE WEAR IN TYRES OF A VEHICLE AND VEHICLE FOR CARRYING OUT THE METHOD
PROCÉDÉ DE DÉTERMINATION DE L'USURE DES PNEUS DES BANDAGES D'UN VÉHICULE ET VÉHICULE PERMETTANT DE METTRE EN OEUVRE LEDIT PROCÉDÉ

(30) Priorität: 21.10.2019 DE 102019128348
(43) Veröffentlichungstag der Anmeldung: 28.04.2021
(73) Patentinhaber: Linde Material Handling GmbH, 63743 Aschaffenburg (DE)
(72) Erfinder: EDDIN, Mohamad Ghassan Sharaf, 36088 Hünfeld (DE); HANKE, Mark, 63739 Aschaffenburg (DE); REINHARDT, Tobias, 64287 Darmstadt (DE); PIETERS, Stefan, 2018 Antwerpen (BE)
(74) Vertreter: Patentship Patentanwaltgesellschaft

(56) Entgegenhaltungen:
- EP-A1- 3 483 582
- DE-A1-102005 017 734
- DE-A1-102011 053 961
- DE-A1-102011 053 963
- DE-A1-102013 109 828
- DE-A1-102014 112 694
- DE-B4-102004 026 426

## Beschreibung

Die Erfindung betrifft ein Verfahren zur Ermittlung von Reifenverschleiß bei Radreifen, insbesondere Superelastik-Reifen oder Luftreifen, eines Fahrzeugs, insbesondere eines Flurförderzeugs, mit mindestens zwei Radachsen, insbesondere mindestens einer Vorderradachse und mindestens einer Hinterradachse, wobei mittels mindestens eines am Fahrzeug angeordneten Entfernungssensors die Entfernung des Entfernungssensors zu einem Fahrboden, auf dem die Radreifen des Fahrzeugs aufliegen, gemessen wird.

Als Radreifen für Flurförderzeuge, insbesondere Gabelstapler, werden überwiegend sogenannte Superelastik-Reifen eingesetzt. Im Gegensatz zu Autoreifen können diese Reifen recht weit abgefahren werden. Es handelt sich dabei üblicherweise nicht um luftbefüllte Reifen, sondern um Vollgummireifen. Sie bestehen meistens aus mehreren Schichten unterschiedlicher Materialien, wobei die Reifen fast bis auf eine Tragschicht abgefahren werden können.

Bislang lässt sich der Reifenverschleiß am Superelastik-Reifen eines Flurförderzeugs optisch durch eine Bedienperson erkennen. Seitlich auf dem Superelastik-Reifen ist eine Markierung angebracht. Sobald die Markierung infolge von Verschleiß nicht mehr vorhanden ist, muss der Superelastik-Reifen ausgetauscht werden.

Die Beurteilung der Reifen, beispielsweise Superelastik-Reifen, durch eine Bedienperson ist allerdings subjektiv und ungenau. Dies bedeutet, dass die Reifen zu früh oder zu spät gewechselt werden können. Im einen Fall entsteht wirtschaftlicher Nachteil, da der Reifen nicht komplett genutzt wurde, im anderen Fall kann es zu Unfällen aufgrund eines Versagens des Reifens kommen.

Viele Flurförderzeuge werden im sogenannten "Full Service"- Geschäft betrieben, bei dem der Flurförderzeughändler für die gesamte Wartung des Flurförderzeugs und auch für eine Überwachung des Reifenzustands und einen rechtzeitigen Tausch der Reifen zuständig ist. Da der Reifenverschleiß stark von individuellem Fahrverhalten von Bedienpersonen abhängig ist, kann über einfache Kenngrößen, z.B. Betriebsstunden, kein genauer Tauschzeitpunkt für die Reifen bestimmt werden. Bei größeren Flurförderzeugflotten in Produktionsbetrieben, z.B. in der Autoindustrie, werden häufig mehrere Hundert Flurförderzeuge an einem Standort betrieben. Eine händische Ermittlung des Verschleißzustandes der Reifen an den Flurförderzeugen ist zeitaufwändig und damit kostenintensiv.

Beim Betrieb von automatisiert fahrenden Fahrzeugen (auch autonome Fahrzeuge oder "Automated Guided Vehicles", AGV, genannt), insbesondere autonomen Flurförderzeugen, werden derzeit hauptsächlich verschleißarme Bandage-Reifen genutzt, die allerdings nur auf Böden hoher Qualität, also mit hoher Ebenheit, zuverlässig betrieben werden können. Im Zuge der weiteren Verbreitung von autonomen Flurförderzeugen sollen diese autonomen Flurförderzeuge zunehmend auch auf schlechteren Böden oder im Außenbereich fahren, was den Einsatz von Superelastik-Reifen oder Luftreifen erfordert.

Insbesondere wird von autonomen Flurförderzeugen erwartet, dass sie nicht nur den Betrieb von Waren automatisiert erledigen, sondern auch im Falle von anstehenden Instandhaltungsmaßnahmen automatisch eine Nachricht an eine Leitstelle senden.

Eine annähernd exakte automatische Erkennung bzw. Messung des Reifenverschleißes durch Sensoren ist für Luftreifen im Automobilbereich bekannt. Dabei wird ein Sensor von innen an der Karkasse des Reifens angebracht, der das Abrollverhalten analysiert. Ein vergleichbares Prinzip bei Superelastik-Reifen umzusetzen ist allerdings auf Grund der Produktion, die ein Einvulkanisieren des Sensors erfordert, und des Betriebs, der mit einer hohen Walkarbeit des Reifens verbunden ist, extrem schwierig.

Aus der EP 1 868 838 B1 ist ein gattungsgemäßes Verfahren mit den Merkmalen des Oberbegriffs des Patentanspruchs 1 sowie ein gattungsgemäßes Fahrzeug mit den Merkmalen des Oberbegriffs des Patentanspruchs 13 bekannt und die Verwendung eines Sensors zur Reifenverschleißmessung bekannt, der den Abstand zwischen Fahrzeugunterseite und Fahrboden misst.

Die DE 10 2004 026 426 B4 offenbart ein gattungsgemäßes Verfahren mit den Merkmalen des Oberbegriffs des Patentanspruchs 1 sowie ein gattungsgemäßes Fahrzeug mit den Merkmalen des Oberbegriffs des Patentanspruchs 13 und beschreibt die Nutzung von vier radseitigen Sensoren an Kraftfahrzeugen, wobei die Sensoren jeweils den Abstand zwischen Radnabe und Fahrboden messen, um unter anderem den Reifenverschleiß zu ermitteln.

Die bisherigen Methoden zur Reifenverschleißmessung sind für Fahrzeuge mit mindestens zwei Radachsen nur mit Einschränkungen geeignet. Soll der Reifenverschleiß an allen Radreifen exakt ermittelt werden, muss bisher an jedem Radreifen gemessen werden, entweder händisch oder mittels einzelner Sensoren an jedem Radreifen, was einen hohen Aufwand erfordert. Eine Messung mit nur einem Sensor, der den Abstand zwischen Fahrzeugunterseite und Fahrboden misst, kann bisher nur Mittelwerte für alle Radreifen liefern, aber keine Differenzierung zwischen unterschiedlichen Reifenverschleißwerten beispielsweise an der Vorderradachse und der Hinterradachse.

Der vorliegenden Erfindung liegt die Aufgabe zugrunde, ein Verfahren der eingangs genannten Art sowie ein Fahrzeug zur Durchführung des Verfahrens so auszugestalten, dass eine Ermittlung des Reifenverschleißes an allen Radachsen mit geringem Aufwand ermöglicht wird.

Diese Aufgabe wird verfahrensseitig erfindungsgemäß dadurch gelöst, dass mittels mindestens eines am Fahrzeug angeordneten Lagesensors ein Nickwinkel der gedachten Verbindungsachse zwischen den Radachsen des Fahrzeugs gegen den Fahrboden gemessen wird, und die Messwerte sowie ein vorgegebener Wert für den Radstand des Fahrzeugs zwischen den Radachsen in einer Datenverarbeitungseinrichtung ausgewertet werden, wobei in der Datenverarbeitungseinrichtung aus Veränderungen der Messwerte während der Betriebszeit des Fahrzeugs Veränderungen der Reifendurchmesser an den Radachsen berechnet werden und daraus der Reifenverschleiß an den Radreifen des Fahrzeugs ermittelt wird.

Der wesentliche Erfindungsgedanke besteht also darin, die Informationen, die ein Entfernungssensor bezüglich des Abstandes des Fahrzeugs zum Fahrboden liefert, mit den Informationen, die ein Lagesensor bezüglich der Neigung des Fahrzeugs liefert, gemeinsam auszuwerten und daraus den Reifenverschleiß an beiden Radachsen zu ermitteln. Während beispielsweise die Veränderung des Reifendurchmessers an einer Radachse direkt aus dem mittels des Entfernungssensors gemessenen Abstand des Fahrzeugs zum Fahrboden ermittelt werden kann, kann die Veränderung des Reifendurchmessers an der anderen Radachse aus dem mittels des Lagesensors gemessenen Nickwinkel berechnet werden. Somit genügen bei der Erfindung im Gegensatz zum Stand der Technik im einfachsten Fall ein Entfernungssensor und ein Lagesensor, um den Reifenverschleiß an zwei Radachsen zu ermitteln.

Gemäß einer besonders bevorzugten Ausgestaltung der Erfindung ist vorgesehen, dass mittels des Entfernungssensors die Entfernung des Entfernungssensors vom Fahrboden im Bereich einer der Radachsen gemessen wird, und in der Datenverarbeitungseinrichtung aus einer Veränderung dieses Messwertes die Veränderung des Reifendurchmessers an der gemessenen Radachse ermittelt wird und die Veränderung des Reifendurchmessers an der nicht gemessenen Radachse aus dem Nickwinkel bei vorgegebenem Radstand ermittelt wird.

Beispielsweise kann durch Vergleich mit dem Nickwinkel im Ursprungszustand, bei dem neue, noch keinen Verschleiß aufweisende, Radreifen vorliegen, erkannt werden, ob der Reifenverschleiß an der nicht gemessenen Radachse genauso groß ist, also der relative Nickwinkel = 0 ist, oder größer ist, also der relative Nickwinkel > 0 ist, oder kleiner ist, also der relative Nickwinkel < 0 ist, als der Reifenverschleiß an der gemessenen Radachse. Mit Hilfe des Radstands kann der absolute Reifenverschleiß an der nicht gemessenen Radachse berechnet werden.

In einer Variante der Erfindung, die einen besonders geringem technischen Aufwand erfordert, misst der Entfernungssensor die Entfernung des Entfernungssensors zum Fahrboden entlang einer senkrecht zum Fahrboden ausgerichteten Messstrecke. Auf diese Weise kann der senkrechte Abstand des Fahrzeugs zum Fahrboden an einer bestimmten Stelle des Flurförderzeugs, vorzugsweise im Bereich einer Radachse, unmittelbar festgestellt werden. Aus der Veränderung des senkrechten Abstands während der Betriebszeit des Fahrzeugs kann auf die Veränderung des Reifendurchmessers und damit auf den Reifenverschleiß an dieser Radachse geschlossen werden.

Eine andere vorteilhafte Variante der Erfindung sieht vor, dass der Entfernungssensor die Entfernung des Entfernungssensors zum Fahrboden entlang einer um einen Neigungswinkel zum Fahrboden geneigt ausgerichteten Messstrecke misst. Aus der Entfernung bis zum Berührpunkt der Messstrecke mit dem Fahrboden und dem Neigungswinkel kann in der Datenverarbeitungseinrichtung der senkrechte Abstand zum Fahrboden berechnet werden. Auf diese Weise kann der senkrechte Abstand des Fahrzeugs zum Fahrboden an einer bestimmten Stelle des Flurförderzeugs, vorzugsweise im Bereich einer Radachse, festgestellt werden. Aus der Veränderung des senkrechten Abstands während der Betriebszeit des Fahrzeugs kann auf die Veränderung des Reifendurchmessers und damit auf den Reifenverschleiß an dieser Radachse geschlossen werden.

Dabei kann der Neigungswinkel beispielsweise aufgrund einer schräg am Fahrzeug montierten Halterung des Entfernungssensors fest vorgegeben sein.

Gemäß einer bevorzugten Ausgestaltung der Erfindung ist der Neigungswinkel veränderlich, wobei der Neigungswinkel mittels eines Neigesensors gemessen wird.

Dabei wird der Entfernungssensor vorzugsweise beim Messvorgang aus einer Ausgangsposition mit parallel zum Fahrboden ausgerichteter Messstrecke in eine Messposition mit um den Neigungswinkel zum Fahrboden geneigt ausgerichteter Messstrecke gebracht. Aus der mittels des Entfernungssensors gemessenen Entfernung des Entfernungssensors zum Berührpunkt der Messstrecke mit dem Fahrboden und dem mittels des Neigesensors gemessenen Neigungswinkel der Messtrecke wird dann in der Datenverarbeitungseinrichtung die senkrechte Entfernung und somit der senkrechte Abstand (Höhe) des Entfernungssensors zum Fahrboden berechnet. Wird diese Messung periodisch in zeitlichen Abständen, beispielsweise täglich, an einer definierten Stelle, an der der Fahrboden eben und unbeschädigt ist, durchgeführt, ergibt die Änderung der Höhe des Entfernungssensors über dem Fahrboden die zeitliche Änderung des Reifendurchmessers und somit den Reifenverschleiß an der im Bereich des Entfernungssensors befindlichen Radachse.

Zweckmäßigerweise wird als Entfernungssensor ein an einer neigbaren Vorrichtung, insbesondere einem Hubmast eines Flurförderzeugs, angeordneter Entfernungssensor verwendet. Mit einem neigbaren Hubmast kann auf einfache Weise der Entfernungsmesssensor für den Messvorgang des Reifenverschleißes in die Messposition geneigt werden.

In einer besonders vorteilhaften Ausgestaltung der Erfindung wird als Entfernungssensor ein zum Kollisionsschutz des Fahrzeugs vorgesehener Entfernungssensor verwendet. Auf diese Weise kann ein auf dem Fahrzeug bereits vorhandener Entfernungssensor für den erfindungsgemäßen Zweck und die Reifenverschleißmessung benutzt werden. Dadurch können Investitionskosten eingespart werden. Im Regelbetrieb kann der Entfernungssensor in seiner Ausgangsposition mit parallel zum Fahrboden ausgerichteter Messstrecke verbleiben, wobei er beispielsweise den Raum vor dem Fahrzeug überwacht und somit als Sensor zum Kollisionsschutz dient. In zeitlichen Abständen, beispielsweise einmal täglich vor Beginn des Regelbetriebs, kann der Entfernungssensor zum Messvorgang aus der Ausgangsposition in die Messposition mit geneigter Messstrecke gebracht werden, um die Reifenverschleißmessung durchzuführen.

Besonders im Falle eines automatisiert fahrenden Fahrzeugs ist es von besonderem Vorteil, einen für den Schutz vor Kollisionen bereits vorhandenen Entfernungssensor ebenso für die Ermittlung des Reifenverschleißes zu nutzen.

Dabei kann als Entfernungssensor ein optischer Sensor, insbesondere ein Laserscanner, beispielsweise 1-D oder 2-D oder 3-D-Laserscanner, oder eine Kamera, beispielsweise Stereokamera oder Time-of-Flight-Kamera, oder ein Ultraschallsensor verwendet werden. Insbesondere bei automatisiert fahrenden Fahrzeugen sind ein Laserscanner und/oder eine Kamera zum Kollisionsschutz üblicherweise bereits verbaut und können mittels einer neigbaren Vorrichtung auf einfache Weise zur Reifenverschleißmessung genutzt werden.

Zur Plausibilisierung der Messung des Reifenverschleißes kann der ermittelte Reifenverschleiß an den Radreifen des Fahrzeugs in der Datenverarbeitungseinrichtung zusätzlich mit Betriebsdaten des Fahrzeugs abgeglichen werden.

Dabei können die Betriebsdaten aus zurückgelegten Fahrstrecken, insbesondere aus Navigationsdaten, und der Anzahl der dafür benötigten Radumdrehungen, insbesondere aus Signalen von Fahrzeugantriebssensoren, beispielsweise von Antriebsmotor-Drehzahlsensoren, ermittelt werden.

Die Erfindung betrifft ferner ein Fahrzeug zur Durchführung des Verfahrens, wobei das Fahrzeug über Radreifen, insbesondere Superelastik-Reifen oder Luftreifen, an mindestens zwei Radachsen, insbesondere mindestens einer Vorderradachse und mindestens einer Hinterradachse, verfügt und mit einer Reifenverschleiß-Messeinrichtung ausgestattet ist, wobei die Reifenverschleiß-Messeinrichtung mindestens einen am Fahrzeug angeordneten Entfernungssensor zur Messung der Entfernung zum Fahrboden umfasst.

Bei dem Fahrzeug wird die gestellte Aufgabe dadurch gelöst, dass die Reifenverschleiß-Messeinrichtung weiterhin mindestens einen am Fahrzeug angeordneten Lagesensor zur Messung des Nickwinkels der gedachten Verbindungsachse zwischen den Radachsen gegen den Fahrboden sowie eine Datenverarbeitungseinrichtung zur Auswertung der Messwerte umfasst.

In einer technisch einfachen Variante der Erfindung ist die Messrichtung des Entfernungssensors senkrecht zum Fahrboden ausgerichtet.

Eine bevorzugte Variante der Erfindung sieht vor, dass die Messrichtung des Entfernungssensors um einen Neigungswinkel zum Fahrboden geneigt ausgerichtet ist.

Dabei ist vorteilhafterweise weiterhin ein Neigesensor zur Messung des Neigewinkels vorgesehen, wobei der Neigesensor mit der Datenverarbeitungseinrichtung in Wirkverbindung steht.

Zweckmäßigerweise ist der Entfernungssensor im Bereich der Vorderradachse angeordnet. Auf diese Weise kann der Reifenverschleiß an der Vorderradachse unmittelbar ermittelt werden.

Besonders bevorzugt ist der Entfernungssensor an einer neigbaren Vorrichtung, insbesondere einem Hubmast eines Flurförderzeugs, angeordnet. Durch Neigung des Hubmastes kann somit der Entfernungssensor ohne zusätzliche erforderliche konstruktive Maßnahmen einfach von der Ausgangsposition mit parallel zum Fahrboden ausgerichteter Messstrecke in die Messposition mit geneigter Messstrecke gebracht werden.

Vorteilhafterweise ist der Entfernungssensor als Kollisionsschutzsensor ausgebildet, so dass er in der Ausgangsposition mit parallel zum Fahrboden ausgerichteter Messstrecke zum Kollisionsschutz dienen kann.

Zweckmäßigerweise ist der Entfernungssensor als optischer Sensor, insbesondere als Laserscanner, beispielsweise 1-D oder 2-D oder 3-D-Laserscanner, oder eine Kamera, beispielsweise Stereokamera oder Time-of-Flight-Kamera, oder ein Ultraschallsensor ausgebildet.

Das Fahrzeug ist vorteilhafterweise als Flurförderzeug, insbesondere als Gabelstapler, Schlepper, Plattformwagen, Hubwagen, Schubmaststapler oder Kommissionierfahrzeug, ausgebildet.

Mit besonderem Vorteil ist das Fahrzeug als autonomes Fahrzeug ausgebildet. Insbesondere bei autonomen Flurförderzeugen, beispielsweise mobilen Kommissionierrobotern, kommt der Vorteil der Erfindung, den Reifenverschleiß von Superelastik-Reifen oder Luftreifen automatisch und ohne Personaleinsatz überwachen zu können, besonders zum Tragen.

Weitere Vorteile und Einzelheiten der Erfindung werden anhand der in den schematischen Figuren dargestellten Ausführungsbeispiele näher erläutert. Hierbei zeigen
- Figur 1: ein beispielsweise als Gabelstapler ausgebildetes Fahrzeug mit Entfernungssensor an einem neigbaren Hubmast in der Ausgangsposition,
- Figur 2: das Fahrzeug aus der Figur 1 in der Messposition, und
- Figur 3: ein beispielsweise als Gabelstapler ausgebildetes Fahrzeug mit Entfernungssensor am Fahrzeugchassis.

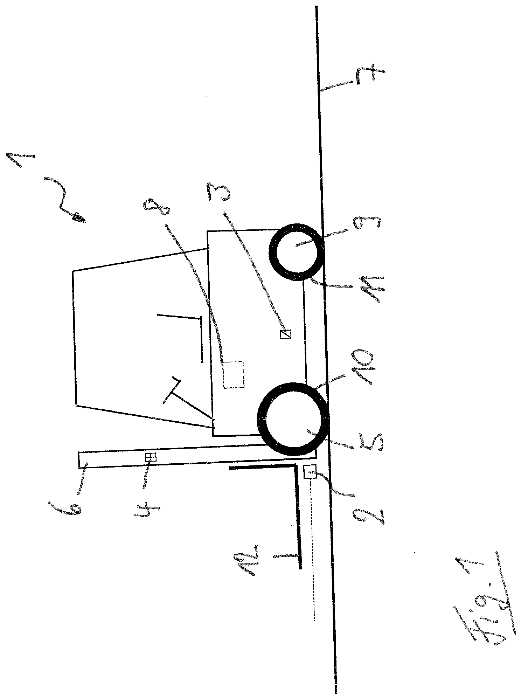

In der Figur 1 ist ein als Flurförderzeug ausgebildetes Fahrzeug 1 dargestellt. Das Flurförderzeug ist beispielsweise als Gabelstapler ausgeführt.

Das Flurförderzeug weist ein Fahrzeugchassis mit zwei Radachsen 5, 9 auf, von denen im dargestellten Ausführungsbeispiel die Radachse 5 als Vorderachse und die Radachse 9 als Hinterachse ausgebildet ist. Die als Vorderachse ausgebildete Radachse 5 ist mit einem oder zwei Radreifen 10 versehen, die als Superelastik-Reifen oder Luftreifen ausgebildet sind. Die als Hinterachse ausgebildete Radachse 9 ist mit einem oder zwei Radreifen 11 versehen, die als Superelastik-Reifen oder Luftreifen ausgebildet sind. Mit den Radreifen 10, 11 stützt sich das Flurförderzeug auf einem Fahrboden 7 an.

Im dargestellten Ausführungsbeispiel ist das Flurförderzeug mit einem Hubmast 6 versehen, an dem ein Lastaufnahmemittel 12 in Form einer Lastgabel mit zwei Gabelzinken anhebbar und absenkbar angeordnet ist. Der Hubmast 6 ist um eine horizontale Querachse neigbar.

Das Flurförderzeug ist mit einer Reifenverschleiß-Messeinrichtung versehen, die einen Entfernungssensor 2, einen Lagesensor 3, einen Neigesensor 4 und eine Datenverarbeitungseinrichtung 8 aufweist, die mit den Sensoren 2, 3 und 4 in Verbindung steht.

Der Entfernungssensor 2 ist beispielsweise als 2D-Laserscanner 2 ausgebildet und nahe der Vorderradachse 5 des Fahrzeugs 1 an einer neigbaren Vorrichtung, beispielsweise dem neigbaren Hubmast 6, angebracht. Die Scanebene des Laserscanners 2 in der Ausgangsposition ist parallel zum Fahrboden 7 ausgerichtet.

An der neigbaren Vorrichtung, im dargestellten Ausführungsbeispiel dem neigbaren Hubmast 6, ist weiterhin der Neigesensor 4 angeordnet. Der Neigesensor 4 ist bevorzugt als Lagesensor ausgebildet.

Der Lagesensor 3 befindet sich im oder am Fahrzeugchassis des Flurförderzeugs.

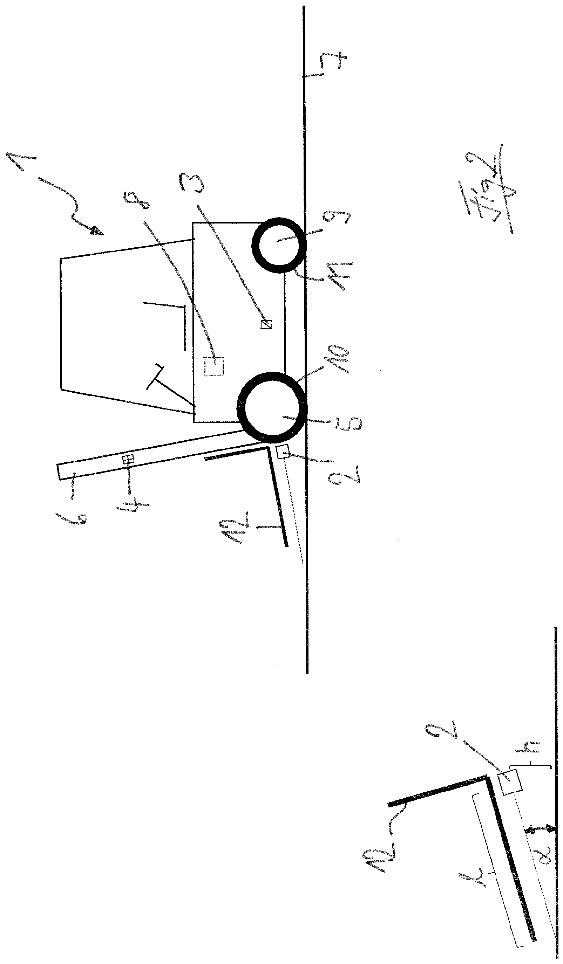

Wird der neigbare Hubmast 6, wie in der Figur 2 veranschaulicht, derart in eine Messposition geneigt, dass der Strahl des Laserscanners 2 den Fahrboden 7 erreicht, kann der Laserscanner 2, wie in der Detailskizze der Figur 2 links unten gezeigt ist, die Entfernung I bis zum Berührpunkt seines Strahls mit dem Fahrboden 7 messen und ausgeben. In Verbindung mit dem Neigewinkel α der neigbaren Vorrichtung, beispielsweise des neigbaren Hubmastes 6, der von dem Neigesensor 4 gemessen und ausgegeben wird, kann nun die Höhe h des Laserscanners 2 über dem Fahrboden 7 in der Datenverarbeitungseinrichtung 8 nach der Formel h = l × sin (α) ermittelt werden. Wird diese Messung täglich an einer definierten Stelle, an der der Fahrboden 7 eben und unbeschädigt ist, durchgeführt, ergibt die Änderung der Höhe h des Laserscanners 2 über dem Fahrboden 7 die tägliche Änderung des Reifendurchmessers und somit den Reifenverschleiß der Radreifen 10 an der Vorderradachse 5.

Der Lagesensor 3 ist in oder an dem Fahrzeugchassis des Fahrzeugs 1 befestigt und misst den aktuell vorliegenden Nickwinkel des Fahrzeugs 1 entlang der Fahrzeuglängsachse. Durch Vergleich mit dem Nickwinkel im Ursprungszustand, bei dem neue, noch keinen Verschleiß aufweisende, Radreifen 10, 11 vorliegen, kann erkannt werden, ob der Reifenverschleiß der Radreifen 11 an der Hinterradachse 9 genauso groß ist, also der relative Nickwinkel = 0 ist, oder größer ist, also der relative Nickwinkel > 0 ist, oder kleiner ist, also der relative Nickwinkel < 0 ist, als der Reifenverschleiß der Radreifen 10 an der Vorderradachse 5. Mit Hilfe des Radstands kann der absolute Reifenverschleiß der Radreifen 11 an der Hinterradachse 9 in der Datenverarbeitungseinrichtung 8 berechnet werden.

Besonders im Falle eines automatisiert fahrenden und somit autonom Fahrzeugs 1 ist es von Vorteil, einen für den Schutz vor Kollisionen sowieso vorhandenen Laserscanner 2 ebenso für die Ermittlung des Reifenverschleißes zu nutzen.

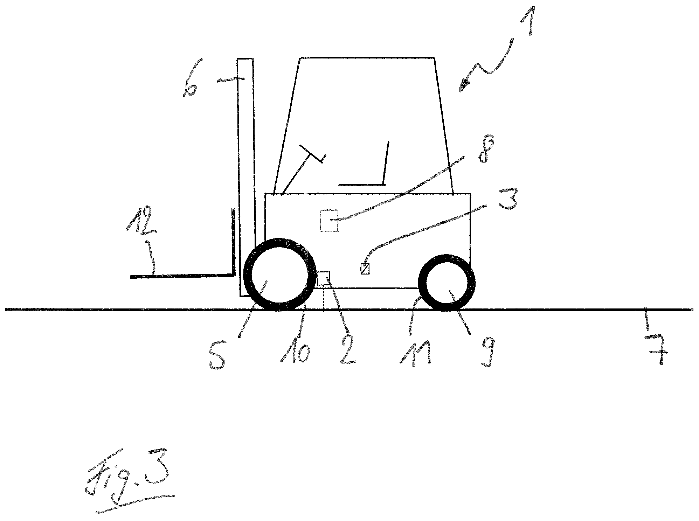

In der Figur 3 ist eine alternative Ausführungsfrom der Erfindung dargestellt. Mit der Figur 1 gleiche Bauteile sind mit gleichen Bezugsziffer versehen.

Das Flurförderzeug der Figur 3 ist mit einer Reifenverschleiß-Messeinrichtung versehen, die einen Entfernungssensor 2, den Lagesensor 3 und die Datenverarbeitungseinrichtung 8 aufweist, die mit den Sensoren 2 und 4 in Verbindung steht.

Im Gegensatz zu der Figur 1 wird in der Figur 3 der Reifenverschleiß mit Hilfe eines nicht neigbaren Entfernungssensors 2 und des Lagesensors 3 ermittelt. Der Entfernungssensor 2 ist hierzu fest am Fahrzeugchassis nahe der Vorderradachse 5 des Fahrzeugs 1 angebracht und zeigt im einfachsten Fall senkrecht nach unten. Der Entfernungssensor 2 misst die Veränderung der Entfernung zum Fahrboden 7 und so den Reifenverschleiß der Radreifen 10 an der Vorderradachse 5. Der Lagesensor 3 ist im oder am Fahrzeugchassis des Fahrzeugs 1 befestigt und misst den aktuell vorliegenden Nickwinkel entlang der Fahrzeuglängsachse. Durch Vergleich mit dem Nickwinkel im Ursprungszustand, bei dem neue, noch keinen Verschleiß aufweisende, Radreifen 10, 11 vorliegen, kann erkannt werden, ob der Reifenverschleiß der Radreifen 11 an der Hinterradachse 9 genauso groß ist, also der relative Nickwinkel = 0 ist, oder größer ist, also der relative Nickwinkel > 0 ist, oder kleiner ist, also der relative Nickwinkel < 0 ist, als der Reifenverschleiß der Radreifen 10 an der Vorderradachse 5. Mit Hilfe des Radstands kann der absolute Reifenverschleiß der Radreifen 11 an der Hinterradachse 9 in der Datenverarbeitungseinrichtung 8 berechnet werden.

Es versteht sich, dass die Figur 3 nicht auf ein Flurförderzeug mit einem Hubmast beschränkt ist. Mit der Reifenverschleiß-Messeinrichtung der Figur 3 kann ebenfalls bei einem Flurförderzeug ohne Hubmast der Reifenverschleiß an den als Superelastik-Reifen oder Luftreifen ausgebildeten Radreifen 10, 11 in einfacher Weise ermittelt werden.

In den Figuren 1 und 3 kann der Lagesensor 3 als absolut messender Lagesensor ausgebildet sein. In der Figur 1 kann der Neigesensor 4 als absolut messender Lagesensor ausgebildet sein.

In der Figur 1 kann anstelle von absolut messenden Neige- und Lagesensoren 4, 3 auch einer der beiden Sensoren als relativ messender Sensor ausgeführt werden. Beispielsweise kann der absolut messende Neigesensor 4 an der neigbaren Vorrichtung, beispielsweise dem neigbaren Hubmast 6, angebracht sein, während ein relativ messende Lagesensor 3 am oder im Fahrzeugchassis des Fahrzeugs 1 montiert ist und die relative Neigung des Fahrzeugchassis zur neigbaren Vorrichtung, beispielsweise des neigbaren Hubmastes 6, misst.

## Patentansprüche

1. Verfahren zur Ermittlung von Reifenverschleiß bei Radreifen (10, 11), insbesondere Superelastik-Reifen oder Luftreifen, eines Fahrzeugs (1), insbesondere eines Flurförderzeugs, mit mindestens zwei Radachsen (5, 9), insbesondere mindestens einer Vorderradachse (5) und mindestens einer Hinterradachse (9), wobei mittels mindestens eines am Fahrzeug (1) angeordneten Entfernungssensors (2) die Entfernung des Entfernungssensors (2) zu einem Fahrboden (7), auf dem die Radreifen (10, 11) des Fahrzeugs (1) aufliegen, gemessen wird, **dadurch gekennzeichnet, dass** mittels mindestens eines am Fahrzeug (1) angeordneten Lagesensors (3) ein Nickwinkel der gedachten Verbindungsachse zwischen den Radachsen (5, 9) des Fahrzeugs (1) gegen den Fahrboden (7) gemessen wird, und die Messwerte sowie ein vorgegebener Wert für den Radstand des Fahrzeugs (1) zwischen den Radachsen (5, 9) in einer Datenverarbeitungseinrichtung (8) ausgewertet werden, wobei in der Datenverarbeitungseinrichtung (8) aus Veränderungen der Messwerte während der Betriebszeit des Fahrzeugs (1) Veränderungen der Reifendurchmesser an den Radachsen (5, 9) berechnet werden und daraus der Reifenverschleiß an den Radreifen (10, 11) des Fahrzeugs (1) ermittelt wird.

2. Verfahren nach Anspruch 1, **dadurch gekennzeichnet, dass** mittels des Entfernungssensors (2) die Entfernung des Entfernungssensors (2) vom Fahrboden (7) im Bereich einer der Radachsen (5; 9) gemessen wird, und in der Datenverarbeitungseinrichtung (8) aus einer Veränderung dieses Messwertes die Veränderung des Reifendurchmessers an der gemessenen Radachse (5; 9) ermittelt wird und die Veränderung des Reifendurchmessers an der nicht gemessenen Radachse (9; 5) aus dem Nickwinkel bei vorgegebenem Radstand ermittelt wird.

3. Verfahren nach Anspruch 1 oder 2, **dadurch gekennzeichnet, dass** der Entfernungssensor (2) die Entfernung des Entfernungssensors (2) zum Fahrboden (7) entlang einer senkrecht zum Fahrboden (7) ausgerichteten Messstrecke misst.

4. Verfahren nach Anspruch 1 oder 2, **dadurch gekennzeichnet, dass** der Entfernungssensor (2) die Entfernung des Entfernungssensors (2) zum Fahrboden (7) entlang einer um einen Neigungswinkel (α) zum Fahrboden (7) geneigt ausgerichteten Messstrecke misst.

5. Verfahren nach Anspruch 4, **dadurch gekennzeichnet, dass** der Neigungswinkel (α) fest vorgegeben ist.

6. Verfahren nach Anspruch 4, **dadurch gekennzeichnet, dass** der Neigungswinkel (α) veränderlich ist und der Neigungswinkel (α) mittels eines Neigesensors (4) gemessen wird.

7. Verfahren nach Anspruch 6, **dadurch gekennzeichnet, dass** der Entfernungssensor (2) beim Messvorgang aus einer Ausgangsposition mit parallel zum Fahrboden (7) ausgerichteter Messstrecke in eine Messposition mit um den Neigungswinkel (α) zum Fahrboden (7) geneigt ausgerichteter Messstrecke gebracht wird und in der Datenverarbeitungseinrichtung (8) aus der gemessenen Entfernung des Entfernungssensors (2) zum Berührpunkt der Messstrecke mit dem Fahrboden (7) und dem gemessenen Neigungswinkel (α) der Messtrecke die senkrechte Entfernung des Entfernungssensors (2) zum Fahrboden (7) berechnet wird.

8. Verfahren nach einem der Ansprüche 4 bis 7, **dadurch gekennzeichnet, dass** als Entfernungssensor (2) ein an einer neigbaren Vorrichtung, insbesondere einem Hubmast (6) eines Flurförderzeugs, angeordneter Entfernungssensor (2) verwendet wird.

9. Verfahren nach einem der Ansprüche 4 bis 8, **dadurch gekennzeichnet, dass** als Entfernungssensor (2) ein zum Kollisionsschutz des Fahrzeugs (1) vorgesehener Entfernungssensor (2) verwendet wird.

10. Verfahren nach einem der Ansprüche 1 bis 9, **dadurch gekennzeichnet, dass** als Entfernungssensor (2) ein optischer Sensor, insbesondere ein Laserscanner oder eine Kamera, oder ein Ultraschallsensor verwendet wird.

11. Verfahren nach einem der Ansprüche 1 bis 10, **dadurch gekennzeichnet, dass** in der Datenverarbeitungseinrichtung (8) der ermittelte Reifenverschleiß an den Radreifen (10, 11) des Fahrzeugs (1) mit Betriebsdaten des Fahrzeugs (1) abgeglichen wird.

12. Verfahren nach Anspruch 11, **dadurch gekennzeichnet, dass** die Betriebsdaten aus zurückgelegten Fahrstrecken, insbesondere aus Navigationsdaten, und dafür benötigten Radumdrehungen, insbesondere aus Signalen von Fahrzeugantriebssensoren, beispielsweise von Antriebsmotor-Drehzahlsensoren, ermittelt werden.

13. Fahrzeug (1) zur Durchführung des Verfahrens nach einem der Ansprüche 1 bis 12, wobei das Fahrzeug (1) über Radreifen (10, 11), insbesondere Superelastik-Reifen oder Luftreifen, an mindestens zwei Radachsen (5, 9), insbesondere mindestens einer Vorderradachse (5) und mindestens einer Hinterradachse (11), verfügt und mit einer Reifenverschleiß-Messeinrichtung ausgestattet ist, wobei die Reifenverschleiß-Messeinrichtung mindestens einen am Fahrzeug (1) angeordneten Entfernungssensor (2) zur Messung der Entfernung zum Fahrboden (7) umfasst, **dadurch gekennzeichnet, dass** die Reifenverschleiß-Messeinrichtung mindestens einen am Fahrzeug (1) angeordneten Lagesensor (3) zur Messung des Nickwinkels der gedachten Verbindungsachse zwischen den Radachsen (5; 9) gegen den Fahrboden (7) sowie eine Datenverarbeitungseinrichtung (8) zur Auswertung der Messwerte umfasst.

14. Fahrzeug (1) nach Anspruch 13, **dadurch gekennzeichnet, dass** die Messrichtung des Entfernungssensors (2) senkrecht zum Fahrboden (7) ausgerichtet ist.

15. Fahrzeug (1) nach Anspruch 13, **dadurch gekennzeichnet, dass** die Messrichtung des Entfernungssensors (2) um einen Neigungswinkel (α) zum Fahrboden (7) geneigt ausgerichtet ist.

16. Fahrzeug (1) nach Anspruch 15, **dadurch gekennzeichnet, dass** ein Neigesensor (4) zur Messung des Neigewinkels (α) vorgesehen ist, wobei der Neigesensor (4) mit der Datenverarbeitungseinrichtung (8) in Wirkverbindung steht.

17. Fahrzeug (1) nach einem der Ansprüche 13 bis 16, **dadurch gekennzeichnet, dass** der Entfernungssensor (2) im Bereich der Vorderradachse (5) angeordnet ist.

18. Fahrzeug (1) nach einem der Ansprüche 13 bis 17, **dadurch gekennzeichnet, dass** der Entfernungssensor (2) an einer neigbaren Vorrichtung, insbesondere einem Hubmast (6) eines Flurförderzeugs, angeordnet ist.

19. Fahrzeug (1) nach einem der Ansprüche 13 bis 18, **dadurch gekennzeichnet, dass** der Entfernungssensor (2) als Kollisionsschutzsensor ausgebildet ist.

20. Fahrzeug (1) nach einem der Ansprüche 13 bis 19, **dadurch gekennzeichnet, dass** der Entfernungssensor (2) als optischer Sensor, insbesondere als Laserscanner oder Kamera, oder als Ultraschallsensor ausgebildet ist.

21. Fahrzeug (1) nach einem der Ansprüche 13 bis 20, **dadurch gekennzeichnet, dass** das Fahrzeug (1) als Flurförderzeug, insbesondere als Gabelstapler, Schlepper, Plattformwagen, Hubwagen, Schubmaststapler oder Kommissionierfahrzeug, ausgebildet ist.

22. Fahrzeug (1) nach einem der Ansprüche 13 bis 21, **dadurch gekennzeichnet, dass** das Fahrzeug (1) als autonomes Fahrzeug (1) ausgebildet ist.

## Claims

1. Method for determining tyre wear on wheel tyres (10, 11), in particular superelastic tyres or pneumatic tyres, of a vehicle (1), in particular an industrial truck, having at least two wheel axles (5, 9), in particular at least one front wheel axle (5) and at least one rear wheel axle (9), wherein at least one distance sensor (2) arranged on the vehicle (1) is used to measure the distance from the distance sensor (2) to a surface (7) on which the wheel tyres (10, 11) of the vehicle (1) lie, **characterized in that** at least one position sensor (3) arranged on the vehicle (1) is used to measure a pitch angle of the imaginary connecting axis between the wheel axles (5, 9) of the vehicle (1) and the surface (7), and the measured values and a predefined value for the wheelbase of the vehicle (1) between the wheel axles (5, 9) are evaluated in a data processing device (8), wherein changes in the tyre diameters on the wheel axles (5, 9) are calculated in the data processing device (8) from changes in the measured values during the operating time of the vehicle (1), and the tyre wear on the wheel tyres (10, 11) of the vehicle (1) is determined therefrom.

2. Method according to Claim 1, **characterized in that** the distance sensor (2) is used to measure the distance from the distance sensor (2) to the surface (7) in the region of one of the wheel axles (5; 9), and the change in the tyre diameter on the measured wheel axle (5; 9) is determined in the data processing device (8) from a change in this measured value, and the change in the tyre diameter on the wheel axle (9; 5) that is not measured is determined from the pitch angle with a predefined wheelbase.

3. Method according to Claim 1 or 2, **characterized in that** the distance sensor (2) measures the distance from the distance sensor (2) to the surface (7) along a measurement path oriented vertically with respect to the surface (7).

4. Method according to Claim 1 or 2, **characterized in that** the distance sensor (2) measures the distance from the distance sensor (2) to the surface (7) along a measurement path that is oriented in a manner inclined with respect to the surface (7) by an angle of inclination (α).

5. Method according to Claim 4, **characterized in that** the angle of inclination (α) is fixedly predefined.

6. Method according to Claim 4, **characterized in that** the angle of inclination (α) is changeable and the angle of inclination (α) is measured by way of an incline sensor (4) .

7. Method according to Claim 6, **characterized in that** the distance sensor (2), in the measurement process, is brought from a starting position, with a measurement path oriented parallel to the surface (7), into a measurement position, with a measurement path oriented in a manner inclined with respect to the surface (7) by the angle of inclination (α), and the vertical distance from the distance sensor (2) to the surface (7) is calculated in the data processing device (8) from the measured distance from the distance sensor (2) to the point of contact of the measurement path with the surface (7) and the measured angle of inclination (α) of the measurement path.

8. Method according to one of Claims 4 to 7, **characterized in that** a distance sensor (2) arranged on an inclinable device, in particular a lift mast (6) of an industrial truck, is used as distance sensor (2).

9. Method according to one of Claims 4 to 8, **characterized in that** a distance sensor (2) intended to protect the vehicle (1) from collisions is used as distance sensor (2).

10. Method according to one of Claims 1 to 9, **characterized in that** an optical sensor, in particular a laser scanner or a camera, or an ultrasonic sensor is used as distance sensor (2).

11. Method according to one of Claims 1 to 10, **characterized in that** the determined tyre wear on the wheel tyres (10, 11) of the vehicle (1) is compared with operating data of the vehicle (1) in the data processing device (8).

12. Method according to Claim 11, **characterized in that** the operating data are determined from previous journeys, in particular from navigation data, and wheel rotations required for these, in particular from signals from vehicle drive sensors, for example from drive motor speed sensors.

13. Vehicle (1) for performing the method according to one of Claims 1 to 12, wherein the vehicle (1) has wheel tyres (10, 11), in particular superelastic tyres or pneumatic tyres, on at least two wheel axles (5, 9), in particular at least one front wheel axle (5) and at least one rear wheel axle (11), and is equipped with a tyre wear measurement device, wherein the tyre wear measurement device comprises at least one distance sensor (2), arranged on the vehicle (1), for measuring the distance to the surface (7), **characterized in that** the tyre wear measurement device comprises at least one position sensor (3), arranged on the vehicle (1), for measuring the pitch angle of the imaginary connecting axis between the wheel axles (5; 9) and the surface (7) and a data processing device (8) for evaluating the measured values.

14. Vehicle (1) according to Claim 13, **characterized in that** the measurement direction of the distance sensor (2) is oriented vertically with respect to the surface (7).

15. Vehicle (1) according to Claim 13, **characterized in that** the measurement direction of the distance sensor (2) is oriented in a manner inclined with respect to the surface (7) by an angle of inclination (α).

16. Vehicle (1) according to Claim 15, **characterized in that** provision is made for an incline sensor (4) for measuring the angle of inclination (α), wherein the incline sensor (4) is operatively connected to the data processing device (8).

17. Vehicle (1) according to one of Claims 13 to 16, **characterized in that** the distance sensor (2) is arranged in the region of the front axle (5).

18. Vehicle (1) according to one of Claims 13 to 17, **characterized in that** the distance sensor (2) is arranged on an inclinable device, in particular a lift mast (6) of an industrial truck.

19. Vehicle (1) according to one of Claims 13 to 18, **characterized in that** the distance sensor (2) is designed as an anticollision sensor.

20. Vehicle (1) according to one of Claims 13 to 19, **characterized in that** the distance sensor (2) is designed as an optical sensor, in particular as a laser scanner or a camera, or as an ultrasonic sensor.

21. Vehicle (1) according to one of Claims 13 to 20, **characterized in that** the vehicle (1) is designed as an industrial truck, in particular as a forklift truck, a hauler, a platform truck, a pallet truck, a reach truck or a picking vehicle.

22. Vehicle (1) according to one of Claims 13 to 21, **characterized in that** the vehicle (1) is designed as an autonomous vehicle (1).

## Revendications

1. Procédé de détermination de l'usure de bandage dans le cas de bandages de roue (10, 11), notamment des bandages super-élastiques ou des bandages pneumatiques, d'un véhicule (1), notamment d'un chariot de manutention, comprenant au moins deux essieux (5, 9), en particulier au moins un essieu avant (5) et au moins un essieu arrière (9), la distance entre au moins un capteur de distance (2) disposé sur le véhicule (1) et un sol de déplacement (7) sur lequel reposent les bandages de roue (10, 11) du véhicule (1) étant mesurée au moyen du capteur de distance (2), **caractérisé en ce qu'**un angle de tangage de l'axe de liaison imaginaire entre les essieux (5, 9) du véhicule (1) par rapport au sol de déplacement (7) est mesuré au moyen d'au moins un capteur de position (3) disposé sur le véhicule (1), et les valeurs mesurées ainsi qu'une valeur prédéfinie pour l'empattement du véhicule (1) entre les essieux (5, 9) sont interprétées dans un dispositif de traitement de données (8), les variations du diamètre de bandage au niveau des essieux (5, 9) étant calculées dans le dispositif de traitement de données (8) à partir des variations des valeurs mesurées pendant le temps de fonctionnement du véhicule (1) et l'usure de bandage au niveau des bandages de roue (10, 11) du véhicule (1) étant déterminée à partir de celles-ci.

2. Procédé selon la revendication 1, **caractérisé en ce que** la distance entre le capteur de distance (2) et le sol de déplacement (7) est mesurée au moyen du capteur de distance (2) dans la zone de l'un des essieux (5 ; 9) et la variation du diamètre de bandage au niveau de l'essieu (5 ; 9) mesuré est déterminée dans le dispositif de traitement de données (8) à partir d'une variation de cette valeur mesurée et la variation du diamètre de bandage au niveau de l'essieu (9 ; 5) non mesuré est déterminée à partir de l'angle de tangage avec l'empattement prédéfini.

3. Procédé selon la revendication 1 ou 2, **caractérisé en ce que** le capteur de distance (2) mesure la distance entre le capteur de distance (2) et le sol de déplacement (7) le long d'une section de mesure orientée perpendiculairement par rapport au sol de déplacement (7) .

4. Procédé selon la revendication 1 ou 2, **caractérisé en ce que** le capteur de distance (2) mesure la distance entre le capteur de distance (2) et le sol de déplacement (7) le long d'une section de mesure orientée inclinée d'un angle d'inclinaison (α) par rapport au sol de déplacement (7).

5. Procédé selon la revendication 4, **caractérisé en ce que** l'angle d'inclinaison (α) est prédéfini à une valeur fixe.

6. Procédé selon la revendication 4, **caractérisé en ce que** l'angle d'inclinaison (α) est variable et l'angle d'inclinaison (α) est mesuré au moyen d'un capteur d'inclinaison (4).

7. Procédé selon la revendication 6, **caractérisé en ce que** le capteur de distance (2), lors de l'opération de mesure, est amené d'une position initiale, avec une section de mesure orientée parallèlement au sol de déplacement (7), dans une position de mesure, avec une section de mesure orientée inclinée de l'angle d'inclinaison (α) par rapport au sol de déplacement (7) et la distance verticale du capteur de distance (2) par rapport au sol de déplacement (7) est calculée dans le dispositif de traitement de données (8) à partir de la distance mesurée du capteur de distance (2) par rapport au point de contact de la section de mesure avec le sol de déplacement (7) et de l'angle d'inclinaison (α) mesuré de la section de mesure.

8. Procédé selon l'une des revendications 4 à 7, **caractérisé en ce que** le capteur de distance (2) utilisé est un capteur de distance (2) disposé au niveau d'un arrangement inclinable, notamment un mât de levage (6) d'un chariot de manutention.

9. Procédé selon l'une des revendications 4 à 8, **caractérisé en ce que** le capteur de distance (2) utilisé est un capteur de distance (2) prévue pour la protection anticollision du véhicule (1).

10. Procédé selon l'une des revendications 1 à 9, **caractérisé en ce que** le capteur de distance (2) utilisé est un capteur optique, notamment un système de balayage à laser ou une caméra, ou un capteur à ultrasons.

11. Procédé selon l'une des revendications 1 à 10, **caractérisé en ce que** l'usure de bandage déterminée au niveau des bandages de roue (10, 11) du véhicule (1) est comparée dans le dispositif de traitement de données (8) avec des données de fonctionnement du véhicule (1).

12. Procédé selon la revendication 11, **caractérisé en ce que** les données de fonctionnement sont déterminées à partir de trajets parcourus, notamment à partir de données de navigation, et des tours de roue nécessaires à cet effet, en particulier à partir de signaux de capteurs d'entraînement de véhicule, par exemple de capteurs de vitesse de rotation de moteur d'entraînement.

13. Véhicule (1) destiné à mettre en œuvre le procédé selon l'une des revendications 1 à 12, le véhicule (1) disposant de bandages de roue (10, 11), notamment des bandages super-élastiques ou des bandages pneumatiques, sur au moins deux essieux (5, 9), en particulier au moins un essieu avant (5) et au moins un essieu arrière (11), et étant équipé d'un dispositif de mesure d'usure de bandage, le dispositif de mesure d'usure de bandage comportant au moins un capteur de distance (2) disposé sur le véhicule (1) et destiné à mesurer la distance par rapport au sol de déplacement (7), **caractérisé en ce que** le dispositif de mesure d'usure de bandage comporte au moins un capteur de position (3) disposé sur le véhicule (1) et destiné à mesurer l'angle de tangage de l'axe de liaison imaginaire entre les essieux (5 ; 9) par rapport au sol de déplacement (7) ainsi qu'un dispositif de traitement de données (8) destiné à interpréter les valeurs mesurées.

14. Véhicule (1) selon la revendication 13, **caractérisé en ce que** le dispositif de mesure du capteur de distance (2) est orienté perpendiculairement par rapport au sol de déplacement (7).

15. Véhicule (1) selon la revendication 13, **caractérisé en ce que** le dispositif de mesure du capteur de distance (2) est orienté incliné d'un angle d'inclinaison (α) par rapport au sol de déplacement (7).

16. Véhicule (1) selon la revendication 15, **caractérisé en ce qu'**un capteur d'inclinaison (4) destiné à mesurer l'angle d'inclinaison (α) est présent, le capteur d'inclinaison (4) se trouvant en liaison active avec le dispositif de traitement de données (8).

17. Véhicule (1) selon l'une des revendications 13 à 16, **caractérisé en ce que** le capteur de distance (2) est disposé dans la zone de l'essieu avant (5).

18. Véhicule (1) selon l'une des revendications 13 à 17, **caractérisé en ce que** le capteur de distance (2) est disposé au niveau d'un arrangement inclinable, notamment d'un mât de levage (6) d'un chariot de manutention.

19. Véhicule (1) selon l'une des revendications 13 à 18, **caractérisé en ce que** le capteur de distance (2) est réalisé sous la forme d'un capteur de protection anticollision.

20. Véhicule (1) selon l'une des revendications 13 à 19, **caractérisé en ce que** le capteur de distance (2) est réalisé sous la forme d'un capteur optique, notamment d'un système de balayage à laser ou d'une caméra, ou d'un capteur à ultrasons.

21. Véhicule (1) selon l'une des revendications 13 à 20, **caractérisé en ce que** le véhicule (1) est réalisé sous la forme d'un chariot de manutention, notamment d'un gerbeur, d'un tracteur, d'un chariot à plateforme, d'un chariot élévateur, d'un chariot élévateur à fourche rétractable ou d'un véhicule de préparation de commandes.

22. Véhicule (1) selon l'une des revendications 13 à 21, **caractérisé en ce que** le véhicule (1) est réalisé sous la forme d'un véhicule (1) autonome.
